# EUROPEAN PATENT APPLICATION

(11) **EP 4 257 461 A1**
(43) Date of publication of application: **11.10.2023**
(21) Application number: 23166952.4
(22) Date of filing: 06.04.2023
(51) Int. Cl.: B62D 43/00, B62D 43/10

(54) **MOVING OF A LOAD OF A CARGO VEHICLE**

(30) Priority: 07.04.2022 IT 202200006950
(71) Applicant: IVECO S.P.A., 10156 Torino (IT)
(72) Inventor: SIVIERO, Irene, 10156 TORINO (IT); BRESSANELLI, Daniele, 10156 TORINO (IT)
(74) Representative: Studio Torta S.p.A.

(57) **Abstract**

Vehicle (1) comprising a plurality of walls (2) and a floor (5) connected to each other to delimit a space (4) suitable for housing a load, and a handling system (10) for handling the load onto/from said floor (5), said handling system (10) comprising:
- a fixing portion (11),
- a movable portion (12) carried in a movable manner with respect to a longitudinal axis (A) of the vehicle (1) by the fixing portion (11) and movable between two operating positions, and
- lifting means (13) carried by the movable portion (12) and configured to be connected to the load and to handle it along a vertical direction.

## Description

### CROSS-REFERENCE TO RELATED APPLICATIONS

This patent application claims priority from Italian patent application no. 102022000006950 filed on April 7, 2022, the entire disclosure of which is incorporated herein by reference.

### TECHNICAL FIELD

The present invention relates to a handling system for a load for a vehicle.

The present invention is preferably, although not exclusively, applied to the handling of loads on a floor of a vehicle of commercial type. In the following, reference will be made to such application by way of example.

### STATE OF THE PRIOR ART

Vehicles of commercial type are provided with a space suitable for housing goods, instrumentations or auxiliary parts of the vehicle for enabling the transportation thereof.

Such space is normally accessible by means of a rear door and is delimited at the bottom by a floor.

The user, in order to take from or place on such floor, which is lowered or at elevated height with respect to the user, has to thus make a remarkable effort if the loads are heavy or have a bulky shape and are difficult to manoeuvre.

Such remarkable effort can cause physical damage to the user of the vehicle or, in the best case, it clearly slows down the loading and unloading operations.

Therefore, there is a felt need to allow the loading and unloading of elements with respect to a vehicle floor so as to prevent the user from making any efforts and increase his/her productivity.

The object of the present invention is to satisfy the above-described needs in an optimized and cost-effective manner.

### SUMMARY OF THE INVENTION

The aforementioned object is achieved by a vehicle comprising a handling system for loads as claimed in the appended claims.

### BRIEF DESCRIPTION OF THE DRAWINGS

In order to better understand the present invention, a preferred embodiment is described in the following, by way of non-limiting example and with reference to the accompanying drawings wherein:

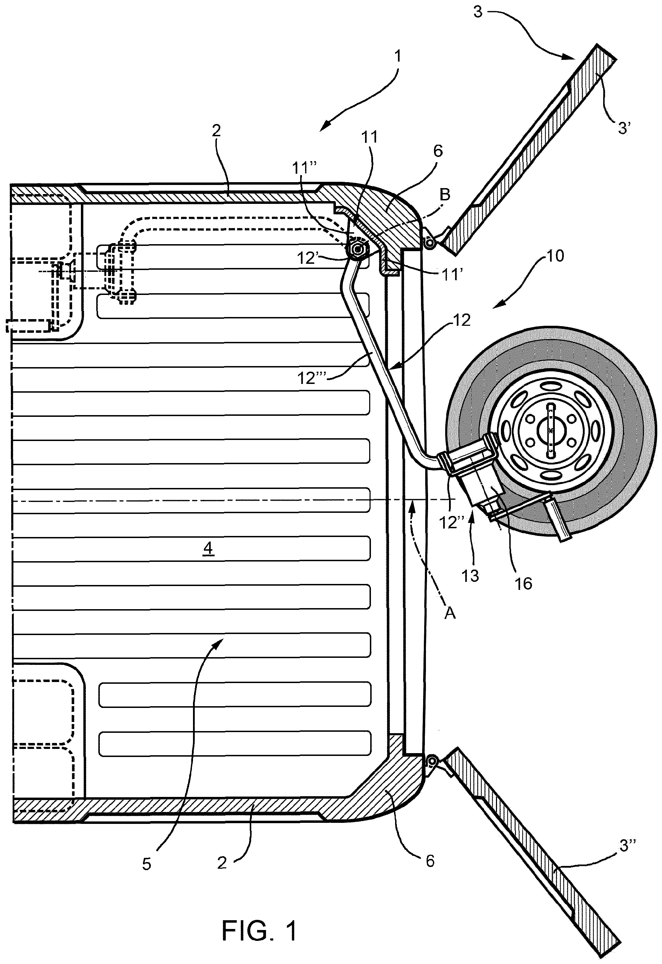

- Figure 1 is a top section view of part of a vehicle provided with a load handling system according to the invention in a first operating condition;
- Figure 2 is the view of Figure 1 in a second operating condition;
- Figure 3 is the view of Figure 1 in a third operating condition;

- Figure 4 is a side section view of part of a vehicle provided with a load handling system according to the invention in a first operating condition; and
- Figure 5 is the view of Figure 4 in a second operating condition.

### DETAILED DESCRIPTION OF THE INVENTION

In the accompanying figures, reference numeral 1 indicates, as a whole, a vehicle only partly illustrated, such as a vehicle of commercial type, for example a vehicle of LCV type (Light Commercial Vehicle).

The vehicle 1 extends along a longitudinal axis A and comprises a plurality of walls 2 and at least one openable door 3 made on one of said walls 2. The walls 2 laterally delimit a space 4 suitable for housing goods of various nature for the transportation thereof. The space 4 is delimited at the top by the roof (not illustrated) of the vehicle and at the bottom by a floor 5.

In the illustrated embodiment, the door 3 is a door advantageously made with two leaves 3', 3" hinged with respect to the side walls 2. Preferably, the door 3 is a rear door hinged in proximity of end portions 6 of the side walls 2.

According to the invention, the vehicle 1 is provided with a handling system 10 for handling a load with respect to the floor 5.

In particular, the handling system 10 comprises a fixing portion 11 configured to be fixed to a wall 2 of the vehicle 1, a movable portion 12 carried in a movable manner by the fixing portion 11 along the longitudinal axis A of the vehicle 1 and lifting means 13 carried by the fixing portion 11 and configured to handle a load along a vertical direction, i.e. a vertical axis or an axis slightly inclined with respect to the vertical to the ground.

In particular, the movable portion 12 is configured to move between a first position, of rest, where the entire movable portion 12 is completely contained on the inside of the floor 5, advantageously adjacent to one of the walls 2 of the vehicle 1, and a second position, of utilization, where a part of the movable portion 12 is on the outside of the aforementioned perimeter.

In particular, the fixing portion 11 comprises a plate 11' defining a plurality of openings suitable for allowing the fixing, for example by means of threaded elements, to a wall of the vehicle. More specifically, the plate 11' is connected to one of the walls of the vehicle 1 above the floor 5.

According to the described embodiment, the plate 11' is fixed to one of the end walls 6 of the side walls 2, in proximity of the door 3.

Advantageously, the movable portion 12 is hinged by means of a hinge 14 with respect to the fixing portion 11 so as to rotate about an axis B substantially vertical with respect to the floor 5, and thus to the ground, moving along the longitudinal axis A.

Advantageously, the hinge 14 is made between a pair of flanges 11'' extending overhanging with respect to the plate 11', preferably made in one piece with the same, and an inner end portion 12' of the movable portion 12.

The movable portion 12 essentially comprises the aforementioned inner end portion 12', an outer end portion 12" and an intermediate portion 12‴ connecting to each other the inner end portion 12' and the outer end portion 12".

Advantageously, in the illustrated embodiment, the inner end portion 12' is made in a tubular shape extending along the axis B, the outer end portion 12" is made in a box shape extending in a direction parallel to the axis B and the intermediate portion 12‴ comprises a pair of tubular elements.

More preferably, the outer end portion 12" has a "C"-shaped section in a plane parallel to the floor 5, whereas the tubular elements extend transversely with respect to the axis B, i.e. along an axis contained in a plane parallel to the floor 5, overhanging from the inner end portion 12'. In particular, the tubular elements are spaced apart from each other along the axis B.

In the described embodiment, the pair of tubular elements of the intermediate portion 12‴ advantageously has an L shape in a plane parallel to the plane defined by the floor 5.

In particular, the portions of the movable portion 12 are made of metallic material and in a single piece.

The lifting means 13 essentially comprise a traction element 15 and an actuator device 16 configured to control the retraction or the elongation of the traction element 15.

Advantageously, the traction element 15 is an element of the cable type, such as a thin steel rope, a chain or any other type of windable or retractable element which enables being retracted or extracted by the actuator device 16 at a first end thereof and being connected at a second end thereof to a load to be lifted.

The aforementioned second end can be provided with connection means 17, such as spring catches or pins or threaded elements, suitable for connecting the load to be lifted or a container for the same.

The actuator device 16 can be of manual or automatic type, for example can comprise a gear which can be actuated manually or an electric motor which can be controlled by the user by means of relative control means for retracting or extracting the aforementioned first end of the traction element 15.

In the described embodiment, the actuator device 16 is of manual type and comprises a lever configured to manually actuate a gear suitable for transforming the torque manually provided by the user on the lever into a multiplied lifting torque.

The lifting means 13, as is illustrated, are advantageously fixed to the outer end portion 12" of the movable portion 12 and rigidly carried by it.

The handling system 10 also provides for locking means, not illustrated, configured to selectively lock the movable portion 12 with respect to the fixing portion 11 in at least the aforementioned first position, of rest and the aforementioned second position of utilization.

Such locking means can be of different type, preferably mechanical such as pins or automatic mechanical stops or which can be actuated by the user.

Still, such locking means can be integrated in the hinge 14, advantageously made as bistable hinge, i.e. stable in one of the aforementioned positions depending on the torque applied to it about the hinge axis.

The operation of the embodiment of the vehicle provided with handling system according to the above-described invention is as follows.

In the accompanying figures, the load to be handled with respect to the floor is represented by a wheel, by way of exemplifying use. A handling and unloading step from the floor 5 will be described.

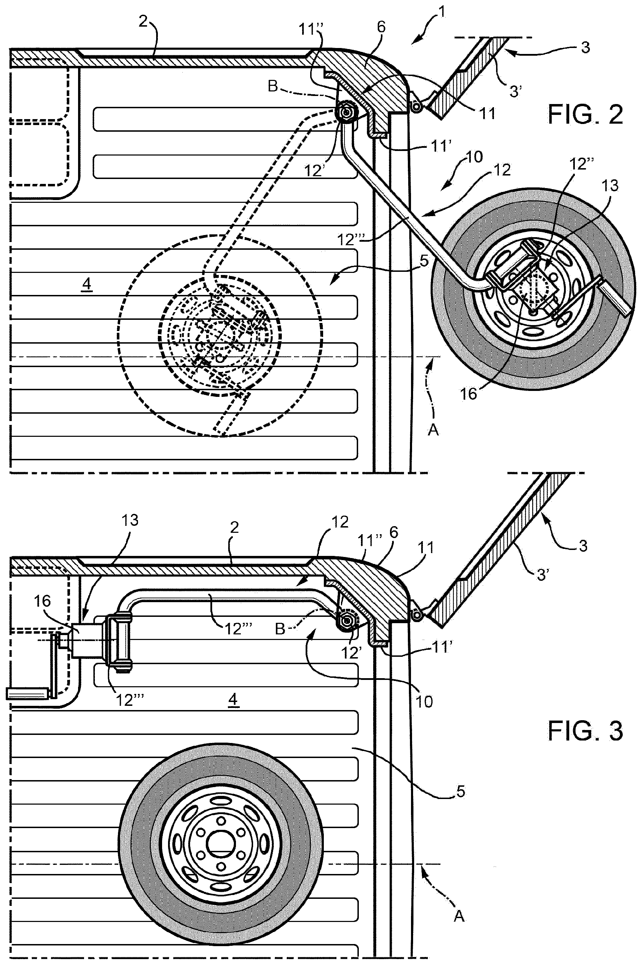

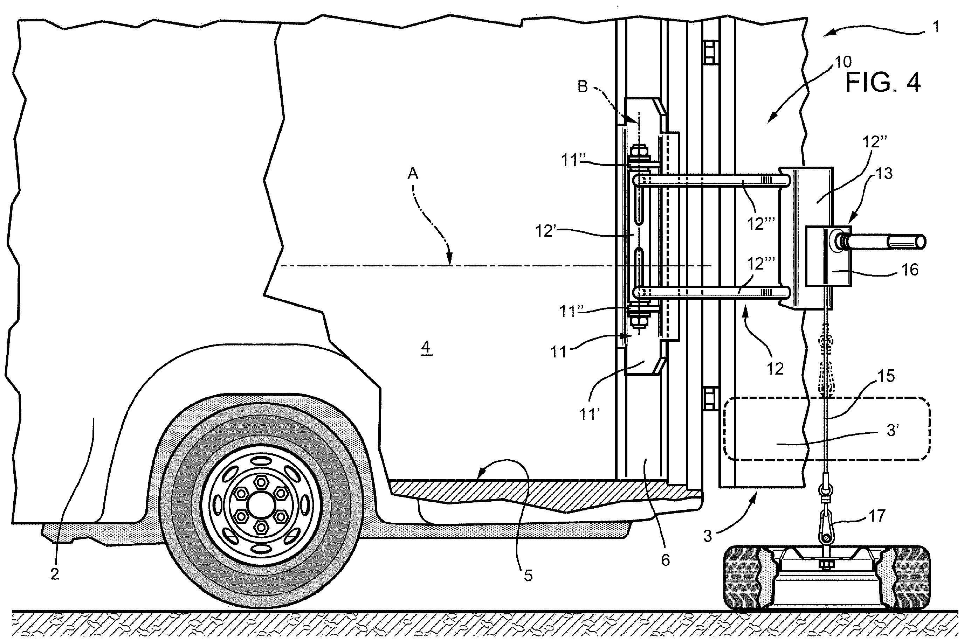

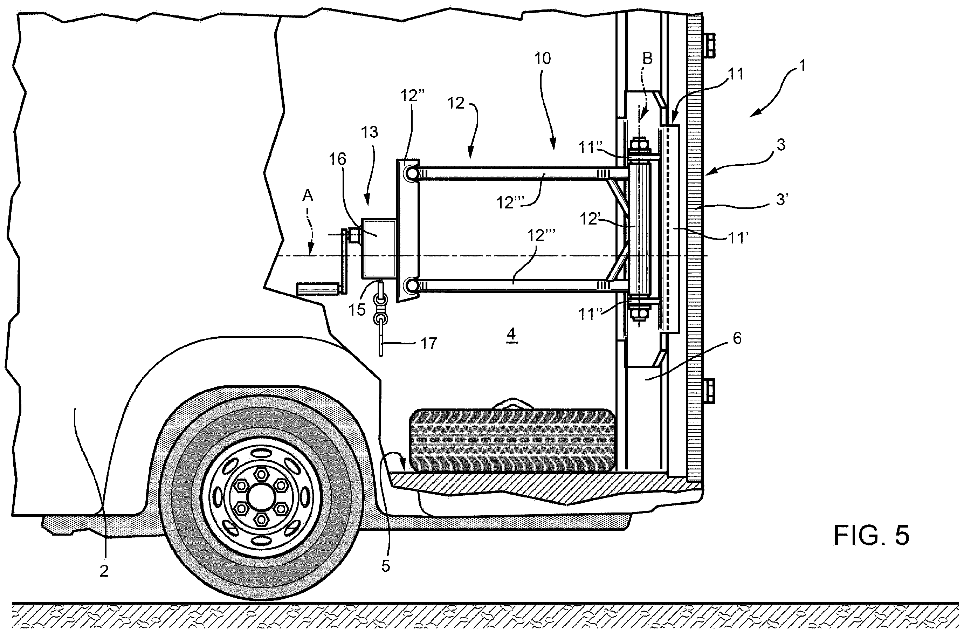

Figures 3 and 5 illustrate a condition of resting position of the movable portion 12 of the handling system 10 where the load is placed on the floor and the movable portion 12, alongside the wall 2 of the vehicle, does not interfere with the useful space 4. By handling the movable portion 12 or by previously unlocking its movement, the user can move the movable portion 12 such that it is positioned above the load, rotating about the axis of the hinge 14, according to what is illustrated with dashed line in Figure 2. Here the user can connect, by means of the connection means 17, the load to the traction element 15 which can be extracted by means of the actuator device 16. Once the connection is made, the user, still by acting on the movable portion, can move the load along the axis A, following the trajectory defined by the hinge 14, so that it comes out of the perimeter of the floor 5, as is illustrated in Figures 2 and 4 (dashed part). At that point, the user, still acting by means of the actuator device 16, can continue extracting the traction element 15 which will bring the load to rest on the ground or on possible other transportation means, such as trolleys. Once the desired unloading position is reached, the user can free the load disengaging it from the connection means 17.

The operation in the loading step is the same with respect to the one described above, clearly simply carried out in reversed order.

Based on the foregoing, the advantages of a vehicle provided with handling system according to the invention are evident.

Thanks to the handling system according to the invention, the user of a vehicle can easily handle loads onto/from a floor of the vehicle without efforts which can lead to physical damage.

Still, the proposed system allows quickening the loading/unloading step and increasing the repeatability, optimizing the working time.

Furthermore, the proposed system is particularly not very bulky when it is not utilized and can be easily mounted on vehicles which are not provided with it.

The possibility to mount different types of lifting means 13 and to have movable portions 12 of different shape allows adapting the handling system to different vehicle types.

Still, the presence of locking means increases the safety of use both in the active utilization of the handling system and in the resting step.

Finally, it is clear that modifications and variations can be made to the vehicle provided with handling system according to the present invention, which however do not depart from the scope of protection defined by the claims.

As described, the shape of the movable portion 12, its coupling with respect to the fixing portion 11 can be varied.

Similarly, the lifting means 13 can be of any type, as well as the locking means.

Still, the door 3 can be made on a side wall 2 of the vehicle 1 instead of on the lower part of the same.

Furthermore, the movable portion can be handled in a different manner with respect to what described, for example it can comprise telescopic elements which can be elongated with respect to the longitudinal axis of the vehicle.

Clearly, the vehicle 1 can comprise several handling systems 10.

## Claims

1. Vehicle (1) comprising a plurality of walls (2) and a floor (5) connected to each other to delimit a space (4) suitable for housing a load, said space (4) being accessible from a door (3) obtained in one of said walls (2), said vehicle comprising a handling system (10) for handling said load onto/from said floor (5), said handling system (10) comprising:
- a fixing portion (11) configured to be fixed to said vehicle (1) in proximity of said door (3),
- a movable portion (12) carried in a movable manner with respect to a longitudinal axis (A) of said vehicle (1) by said fixing portion (11) between a first position in which said movable portion (12) is completely contained on the inside of the perimeter of said floor (5) and a second position in which a portion of said movable portion (12) is on the outside of said perimeter, and
- lifting means (13) carried by said movable portion (12) and configured to be connected to said load and to handle it along a vertical direction,
wherein said lifting means (13) comprise a traction element (15) and an actuator device (16), said actuator device (16) being configured to retract or extract said traction element (15) with respect to said movable portion (12),
wherein said actuator device (16) comprises a gear which can be actuated manually or automatically.

2. Vehicle according to claim 1, wherein said movable portion (12) is connected to said fixing portion (11) by means of a hinge (14), the axis (B) of said hinge (14) being perpendicular to said floor (5).

3. Vehicle according to claim 2, wherein said movable portion (12) comprises an inner end (12') connected by means of said hinge (14) to said fixing portion (11), an outer end (12") configured to carry said lifting means (13) and a connecting portion (12‴) configured to connect said inner and outer portions (12', 12").

4. Vehicle according to one of the preceding claims, wherein said handling system (10) comprises locking means configured to lock said movable portion in at least said first and second positions.

5. Vehicle according to claim 4 when dependent on claims 2 or 3, wherein said locking means are integrated in said hinge.

6. Vehicle according to one of the preceding claims, wherein said fixing portion (11) comprises a plate (11') that can be fixed to said wall (2).

7. Vehicle according to one of the preceding claims, wherein said traction element (15) comprises a cable element having a first end connected to said actuator device and a second end connectable to said load.

8. Vehicle according to one of the preceding claims, wherein said traction element (15) comprises connection means (17) configured to connect said traction element (15) to said load.

9. Vehicle according to one of the preceding claims, wherein in said first position said movable element (12) is adjacent to said wall (2).

10. Vehicle according to one of the preceding claims, wherein in said door (3) there is a rear door of said vehicle (1), said fixing portion (11) being fixed to an end portion (6) of said wall (2) in which said door (3) is connected.

11. Vehicle according to one of the preceding claims when dependent on claim 3, wherein said intermediate portion (12‴) has an "L" shape in a plane parallel to said floor (5).

12. Vehicle according to claim 11, wherein said portions (12', 12", 12‴) of said movable portion (12) comprise boxed elements and/or tubular elements.
